# EUROPEAN PATENT APPLICATION

(11) **EP 0 926 425 A1**
(43) Date of publication of application: **30.06.1999**
(21) Application number: 98203645.1
(22) Date of filing: 28.10.1998
(51) Int. Cl.: F16M 11/32

(54) **A grip for a leg of a rod-like support, particulary for photographic tripods.**

(30) Priority: 19.12.1997 IT PD970093 U
(71) Applicant: LINO MANFROTTO + CO. S.p.A., 36061 Bassano del Grappa (IT)
(72) Inventor: Ometto, Simon, 36020 Pove del Grappa (VI) (IT); Speggiorin, Paolo, 36065 Mussolente (VI) (IT)
(74) Representative: Cantaluppi, Stefano

(57) **Abstract**

The grip comprises a flexible sheet-like element (11) for application to a portion of a leg (2a) of the support, extending around the leg in a loop and having two opposed edges (12a,b) which, in the loop configuration, are disposed in a facing or at least partially superimposed arrangement; the sheet-like element (11) comprises a visible gripping surface (11a) and an opposite surface (11b) which is rendered adhesive and can adhere to the portion of the leg (2a) of the support, as well as auxiliary fastening means (15a,b;16a,b) such as a sliding-clasp fastener or a pull closure on the opposed edges (12a,b)for joining these edges together releasably.

## Description

The present invention relates to a grip for a leg of a rod-like support, particularly for tripods.

During positioning, photographic tripods are gripped by their legs in order to arrange the legs in the desired position.

To facilitate this positioning, at least one of the tubular legs of the tripod preferably bears, in the gripping region, a textile or elastomeric covering which constitutes a preferential grip thereof.

At the moment, this covering is applied with the use of adhesive bands which are widely used for covering the handles of tennis rackets.

However, these grips have a completely unprofessional appearance, are difficult to fit, and are just as difficult to replace when worn.

Moreover, they are unsuitable for carrying the manufacturer's trade mark.

The main object of the present invention is to provide a grip for a leg of a rod-like support, particularly designed for the legs of photographic tripods, which is designed structurally and functionally to prevent all of the disadvantages complained of with reference to the prior art mentioned.

Another object of the invention is to produce this grip in a manner such that it is associated removably with the leg of the support. A further object of the invention is to produce the grip in a manner such that it ensures a convenient and effective grip, does not slide along the leg of the support once fitted, and enables the manufacturer's distinguishing marks to be applied in an easily visible position.

This and other objects which will become clearer from the following description are achieved by the invention by means of a grip for a leg of a rod-like support particularly for photographic tripods formed in accordance with the following claims.

The characteristics and advantages of the invention will become clearer from the detailed description of two preferred embodiments thereof described by way of non-limiting example, with reference to the appended drawings, in which:
Figure 1 is a partial perspective view of a photographic tripod, one leg of which is provided with a grip according to the invention,
Figures 2 and 3 are a perspective view and a partial view on an enlarged scale and in section, respectively, of a first embodiment of the invention,
Figure 4 is a perspective view of a second embodiment of the invention.

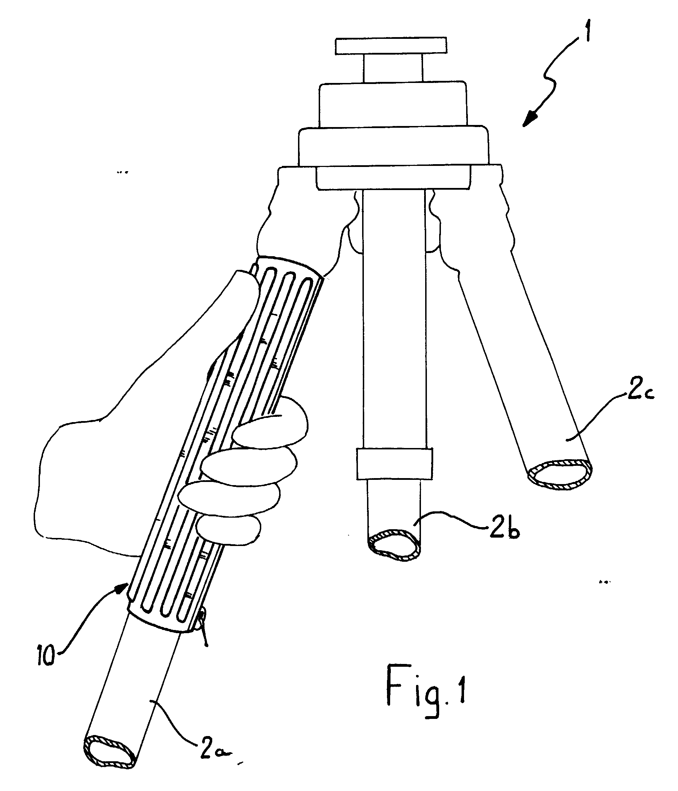

With reference to Figure 1, a photographic tripod, generally indicated 1, comprises, in the embodiment illustrated, three legs indicated 2a, 2b, 2c, respectively.

Only one of the legs is usually moved during the use of the tripod in order to achieve the desired positioning, the remaining legs generally being given an approximate positioning the adjustment of which is achieved precisely by appropriate movement of the third leg. This leg, indicated 2a, has a grip 10 formed in accordance with the present invention.

The grip 10 comprises a flexible sheet-like element 11 having opposed major surfaces 11a, 11b and opposed edges 12a, 12b disposed parallel to the axis of the leg 2a in use.

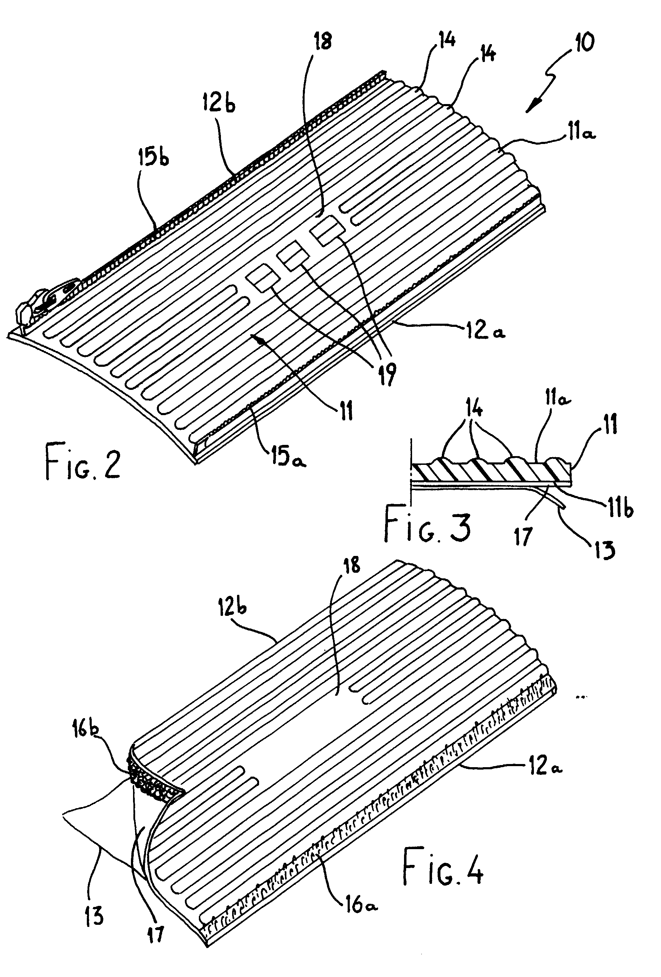

The sheet-like element 11 is intended to be applied to the portion of the leg 2a, extending around the leg in a loop. With this arrangement, the edges 12a, 12b are placed side by side or, with reference to the embodiment of Figure 4, are partially superimposed.

Respective fastening means and counter-means are sewn along the edges and, in the embodiment of Figures 1 to 3, these are constituted by two strips 15a, 15b of a sliding-clasp fastener, better known by the trade name "ZIP" fastener, whereas in the embodiment of Figure 4 they are constituted by two strips 16a, 16b of a touch-close pull closure better known by the registered trade mark VELCRO®. Alternatively, each edge may be provided with a plurality of eyes, for example, for a lace fastening or equivalent fastening means well known *per se* to an expert in the art.

The surface 11b is rendered adhesive by the application of a layer of adhesive 17 which, prior to use, is protected by a removable film 13.

Preferably, the surface 11a constituting the visible surface when the grip is applied has a plurality of corrugations or undulations 14 parallel to the edges 12a, 12b and has a central depression 18 constituting a preferential seat for the application of distinguishing marks 19 such as the trade mark of the manufacturer of the grip and/or of the tripod.

Preferably, the flexible sheet-like element is formed in one piece of soft elastomeric material to the surface 11b of which a double-sided adhesive film is applied, and the surface 11a of which is moulded in accordance with the indications given above.

In order to apply the grip to the portion of the tripod leg, the protective film 13 is first removed and the sheet-like element is placed on the preselected portion of leg so as to extend around it in a loop.

The auxiliary fastening means, whether they be of the sliding type, of the pull type, or of another type, are then closed, care preferably being taken to arrange these means on the inner side of the tripod leg.

In the event of damage, the grip can easily be removed by release of the auxiliary fastening in order then to pull off the flexible sheet-like element.

The invention thus achieves the objects set and has many advantages in comparison with grips hand-made by photographers. In the first place, the grip thus obtained has a professional configuration, it is fitted extremely firmly by virtue of the provision both of the adhesive surface and of the auxiliary fastening means, and it can be removed easily for replacement. Moreover, the soft and corrugated surface enables it to be gripped easily and firmly.

Although the invention is described by way of example with reference to a photographic tripod, it is intended that it may be applied to supports of different types such as monopod supports or stands of different shapes.

## Claims

1. A grip for a leg (2a) of a rod-like support (1), particularly for photographic tripods, characterized in that it comprises a flexible sheet-like element (11) for application to a portion of a leg (2a) of the support, extending around the leg in a loop and having two opposed edges (12a,b) which, in the loop configuration, are disposed in a facing or at least partially superimposed arrangement, the sheet-like element (11) comprising a visible surface (11a) defining a gripping surface and an opposite surface (11b) which is rendered adhesive and can adhere to the portion of the leg (2a), as well as auxiliary fastening means (15a,b;16a,b) on the opposite edges (12a,b) for joining the edges together releasably.

2. A grip according to Claim 1 in which the visible surface (11a) is made of soft elastomeric material.

3. A grip according to Claim 1 or Claim 2, in which the visible surface (11a) is corrugated.

4. A grip according to one or more of the preceding claims, in which the visible surface (11a) has a depression (18) constituting a preferential seat for the application of distinguishing marks (19).

5. A grip according to one or more of the preceding claims, in which the fastening means (15a,b) are of the sliding-clasp type.

6. A grip according to one or more of Claims 1 to 4, in which the fastening means (16a,b) are of the touch-close pull closure type.
